# EUROPEAN PATENT APPLICATION

(11) **EP 4 753 118 A1**
(43) Date of publication of application: **03.06.2026**
(21) Application number: 24845184.1
(22) Date of filing: 28.05.2024
(51) Int. Cl.: H02K 3/38, H02K 15/085

(54) **FOAMED ADHESIVE FLAT WIRE, STATOR, AND STATOR MANUFACTURING METHOD**

(30) Priority: 26.07.2023 JP 2023121543
(71) Applicant: KABUSHIKI KAISHA TOSHIBA, Minato-ku Tokyo 105-0023 (JP)
(72) Inventor: MATSUBARA, Masakatsu, Kawasaki-shi, Kanagawa 212-0013 (JP); Matsuoka, Yusuke, Kawasaki-shi, Kanagawa 212-0013 (JP); MORI, Daisuke, Kawasaki-shi, Kanagawa 212-0013 (JP); SASAKI, Naoya, Kawasaki-shi, Kanagawa 212-0013 (JP); TANAKA, Hiroto, Kawasaki-shi, Kanagawa 212-0013 (JP)
(74) Representative: AWA Sweden AB
(86) International application number: PCT/JP2024/019530
(87) International publication number: WO 2025/022802

(57) **Abstract**

According to the embodiment, a foamed adhesive flat wire (10) comprises: a rectangular conductor (11) having a substantially rectangular cross section; an enamel layer (12) located at an outer surface of the rectangular conductor; and a foamed adhesive layer (13) located at an outer surface of the enamel layer (12), the foamed adhesive layer (13) being foamable and adhesive at or above a prescribed temperature. When the foamed adhesive layer (13) is not adjacent to another member compared to side surfaces of the foamed adhesive flat wire (10), the foamed adhesive layer side surface (13c, 13d) may have a reduced thickness or a thickness of zero as compared with a case in which the foamed adhesive flat wire is adjacent to another member.

## Description

### [Technical Field]

The invention relates to a foam adhesive flat wire, a stator, and a stator manufacturing method.

### [Background Art]

In a stator of a rotating electric machine, a rectangular conductor that has a substantially rectangular cross section is often used as a stator winding. The rectangular conductor is generally covered with an enamel layer at the outer surface of the rectangular conductor.

When winding with a rectangular conductor, it is necessary to ensure vibration resistance, that is, it is necessary to prevent fluctuation of the relative positions between the rectangular conductors or between the rectangular conductor and the stator core.

It is therefore necessary to adhere the stator winding with varnish.

### [Prior Art Documents]

### [Patent Literature]

Patent Literature 1: JP-A 2022-34889 (Kokai)

### [Summary of Invention]

### [Problem to be Solved by the Invention]

When adhering a stator winding with varnish, there has been fluctuation of the penetration of the varnish and adhesion between the stator winding inside a slot and the stator winding at the coil end, and there has been a possibility of reducing reliability. Also, manufacturability has been reduced due to the control of conditions in the varnish process, the time necessary for the varnish process, etc.

An object of the invention is to provide a foamed adhesive flat wire, a stator, and a stator manufacturing method in which the winding is stably adhered and the reliability for vibration resistance is increased.

### [Means for Solving the Problem]

To achieve the aforementioned object, a foamed adhesive flat wire according to an embodiment of the invention includes a rectangular conductor having a substantially rectangular cross section, an enamel layer located at an outer surface of the rectangular conductor, and a foamed adhesive layer that is located at an outer surface of the enamel layer and is foamable and adhesive at or above a prescribed temperature.

### [Brief Description of Drawings]

[FIG. 1]

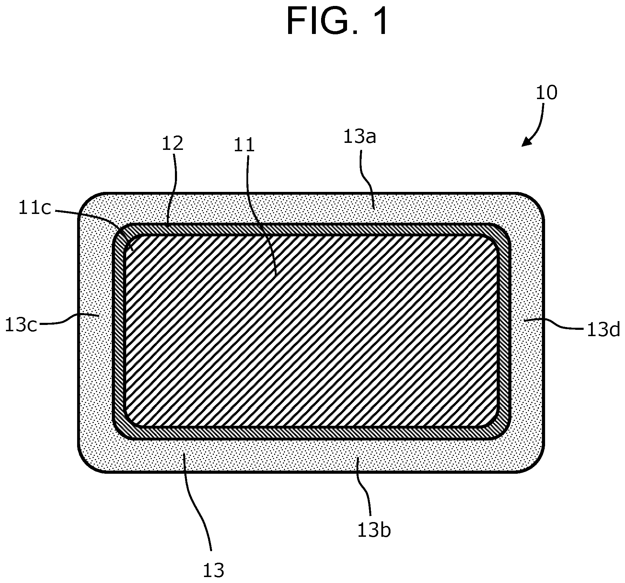

   FIG. 1 is a partial transverse cross-sectional view showing a foamed adhesive flat wire according to a first embodiment.
[FIG. 2]

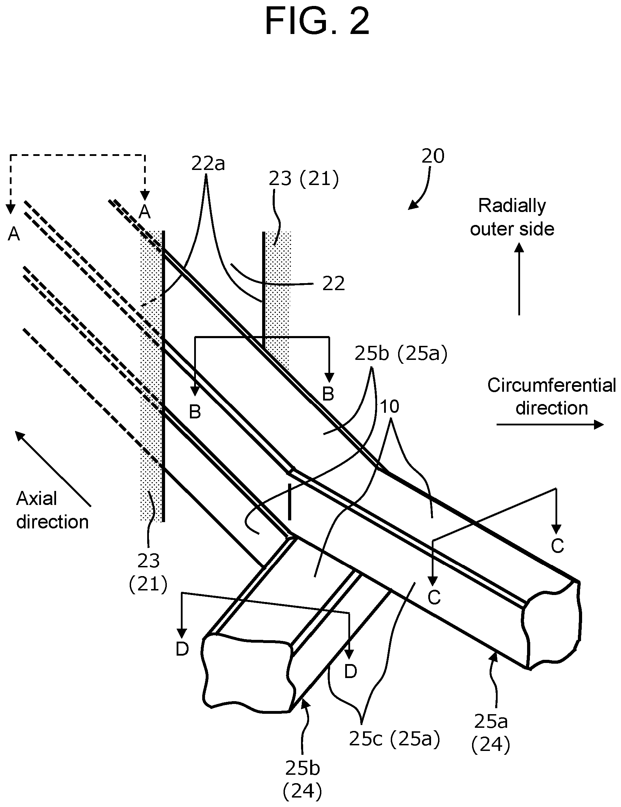

   FIG. 2 is a partial transverse cross-sectional view showing a stator winding of a stator according to the first embodiment.
[FIG. 3]

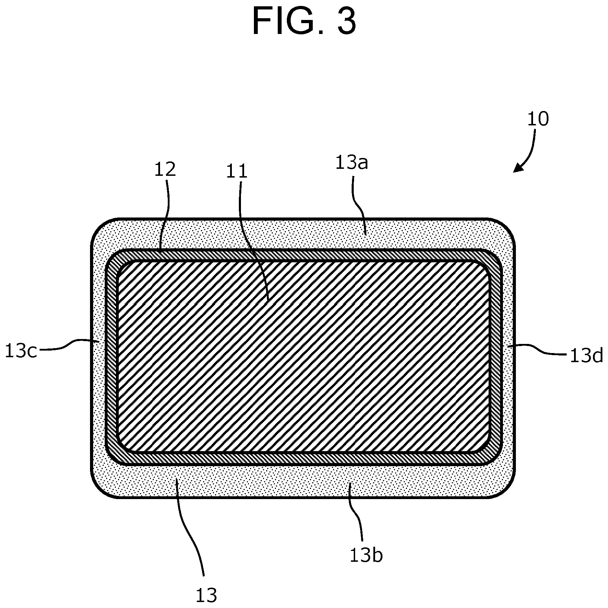

   FIG. 3 is a partial transverse cross-sectional view showing a B-B cross section of FIG. 2 showing the stator winding of the stator according to the first embodiment.
[FIG. 4]

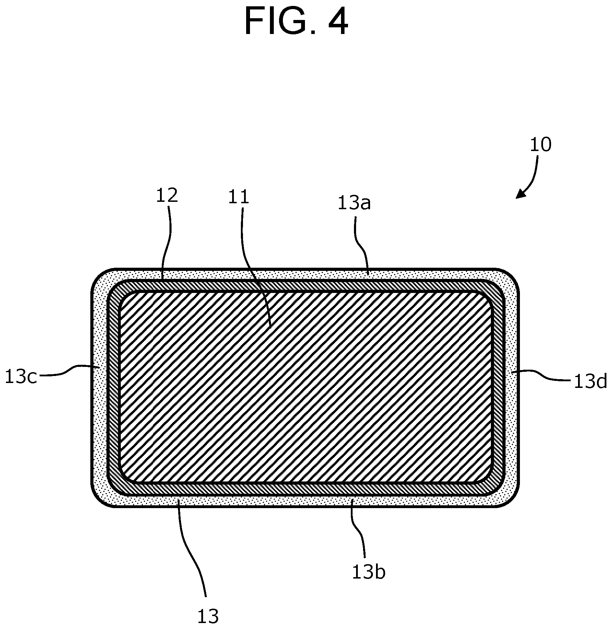

   FIG. 4 is a partial transverse cross-sectional view showing a C-C cross section and a D-D cross section of FIG. 2 showing the stator winding of the stator according to the first embodiment.
[FIG. 5]

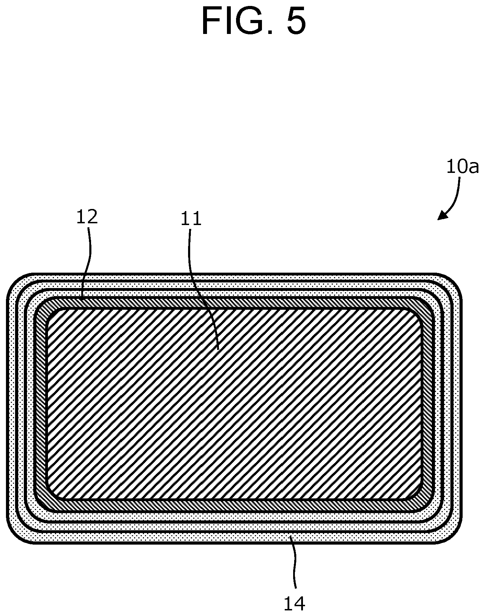

   FIG. 5 is a partial transverse cross-sectional view showing a foamed adhesive flat wire according to a second embodiment.
[FIG. 6]

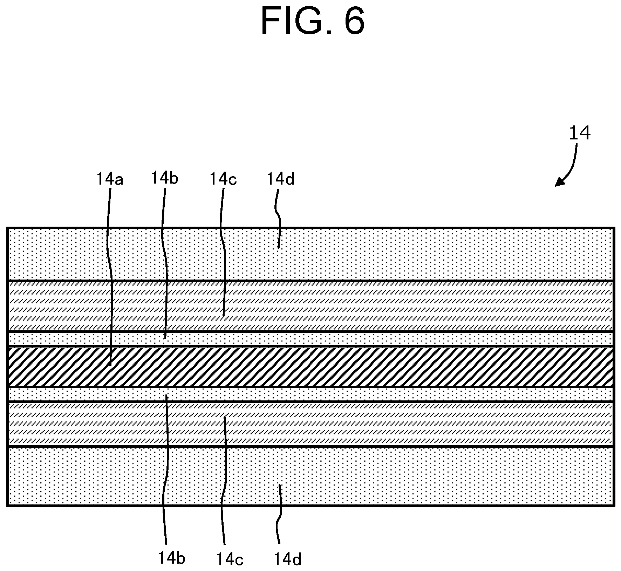

   FIG. 6 is a partial longitudinal cross-section showing a heat-foamed sheet of the foamed adhesive flat wire according to the second embodiment.
[FIG. 7]

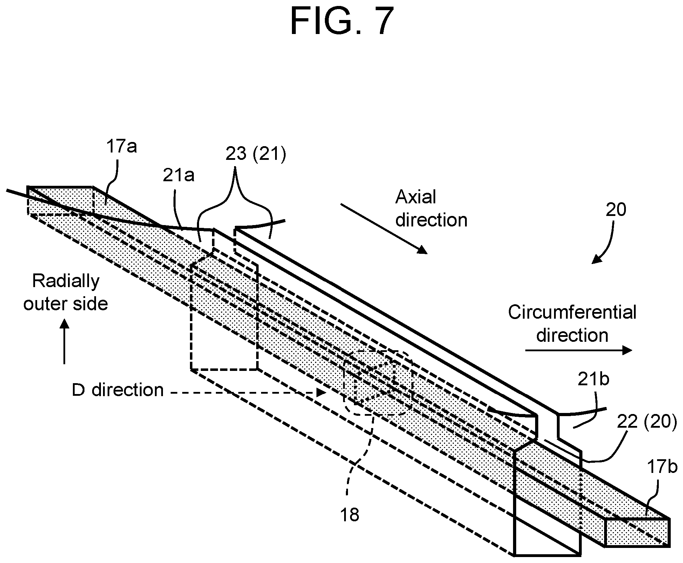

   FIG. 7 is a perspective view illustrating a flat wire in-stator connection method of a stator manufacturing method according to a third embodiment.
[FIG. 8]

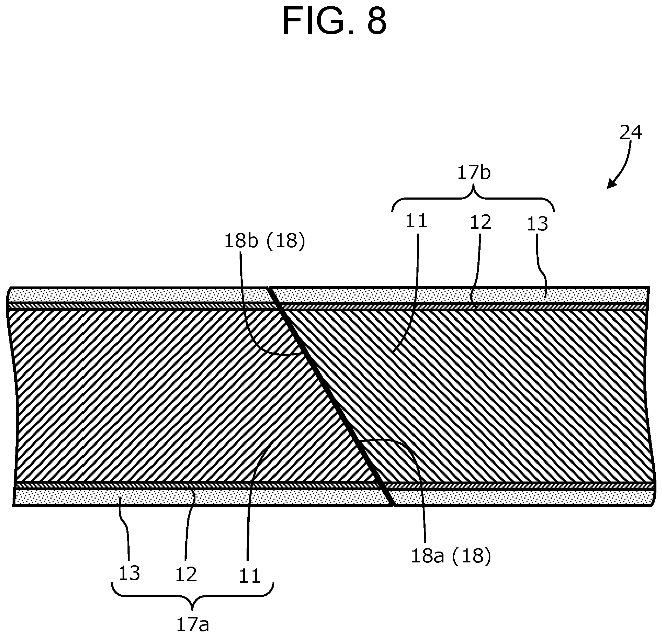

   FIG. 8 is a longitudinal cross-sectional view showing welding grooves in the flat wire in-stator connection method of the stator manufacturing method according to the third embodiment.
[FIG. 9]

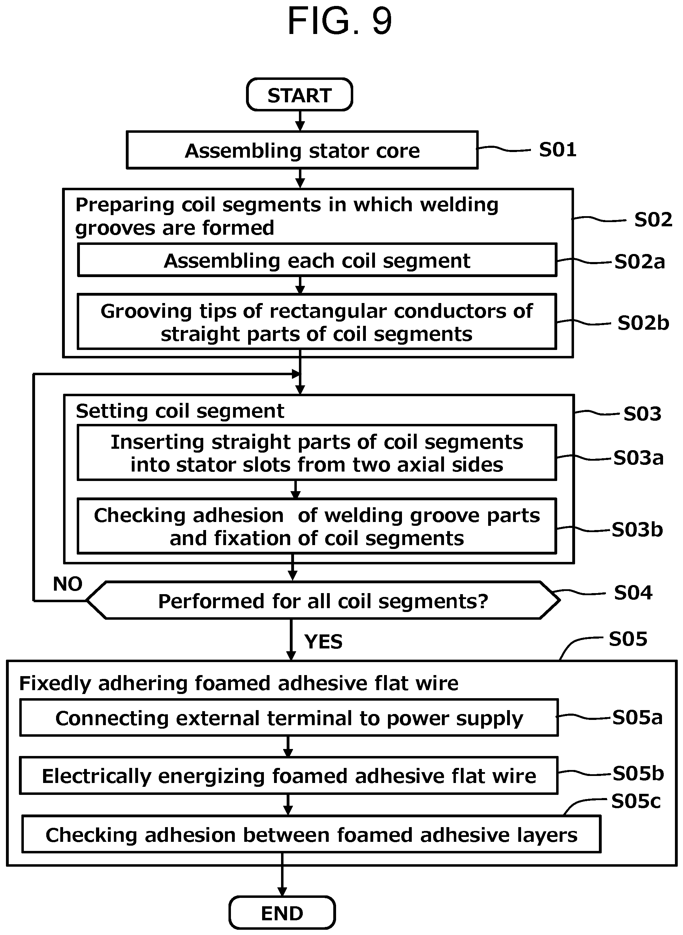

   FIG. 9 is a flowchart showing a procedure of the stator manufacturing method according to the third embodiment.

### [Description of Embodiments]

A foam adhesive flat wire, a stator, and a stator manufacturing method according to embodiments of the invention will now be described with reference to the drawings. Herein, the same or similar portions are marked with common reference numerals; and a redundant description is omitted.

### [First embodiment]

FIG. 1 is a partial transverse cross-sectional view showing a foamed adhesive flat wire 10 according to a first embodiment.

The foamed adhesive flat wire 10 includes a rectangular conductor 11 that has a rectangular cross section and extends in the longitudinal direction, an enamel layer 12 located at the outer perimeter of the rectangular conductor, and a foamed adhesive layer 13 located at the outer perimeter of the enamel layer 12.

Herein, for example, corner parts 11c of the rectangular conductor 11, that is, the edges, i.e., the four corners in the transverse cross-sectional view of FIG. 1, are formed with tapers or formed to be rounded; however, the entire rectangular conductor 11 may be substantially rectangular. Hereinbelow, the cross-sectional shape is called rectangular even when the cross-sectional shape is substantially rectangular with such corner parts 11c.

The enamel layer 12 is formed with a substantially uniform thickness at the four side surfaces of the foamed adhesive flat wire. Herein, substantially uniform means formed within the range of fabrication fluctuation and within the range of the accuracy of measurement when checking.

The foamed adhesive layer 13 foams and manifests an adhesion function when heated or when the temperature is increased to a prescribed temperature or higher. Here, in the case of a thermoplastic resin, the prescribed temperature may be the glass transition temperature. FIG. 1 shows a case where the foamed adhesive layer 13 is formed with a substantially uniform thickness at the four side surfaces. However, as shown below, the thickness may be such that the thickness has a distribution according to the conditions at the location of use. For convenience in the following description, among the side surfaces to which the foamed adhesive layer 13 is applied, the upper part in the transverse cross-sectional view is referred to as a foamed adhesive layer upper surface 13a, the lower part is referred to as a foamed adhesive layer lower surface 13b, and the parts in horizontal directions are referred to as foamed adhesive layer side surfaces 13c and 13d.

FIG. 2 is a perspective view showing a portion of a stator winding 24 of a stator 20 according to the first embodiment. The stator 20 is arranged to surround a rotor, which is not illustrated, at the outer side of the rotor in the radial direction. The stator 20 includes a stator core 21 and the stator winding 24.

For convenience in the following description, the upward direction in FIG. 2 is referred to as the radially outer side; the horizontal direction is referred to as the circumferential direction; and a direction perpendicular to the radial direction and the circumferential direction is referred to as the axial direction.

Stator teeth 23 that are arranged with a spacing interposed around the circumferential direction (circumference) are formed in the stator core 21. Also, stator slots 22 are defined by the stator teeth 23 that are adjacent to each other in the circumferential direction.

As a portion of the stator winding 24, a first coil segment 25a and a second coil segment 25b inserted into the stator slot 22 are shown. Here, coil segments such as the first coil segment 25a, the second coil segment 25b, etc., each include two straight parts 25c extending in the axial direction and a connecting part connecting the two straight parts 25c. Each straight part 25c is inserted into the stator slot 22. The two straight parts 25c of the same coil segment are inserted into mutually-different stator slots 22.

FIG. 2 shows the greater part of one straight part 25c of the first coil segment 25a and the greater part of one straight part 25c of the second coil segment 25b housed in the same stator slot 22 and vertically adjacent to each other.

FIG. 1 mentioned above shows the shape of an A-A cross section of FIG. 2. The location of the A-A cross section is a location at which the straight parts 25c of each of the first and second coil segments 25a and 25b are housed inside the stator slot 22. This is a location at which the first coil segment 25a and the second coil segment 25b are adjacent to each other, and the first coil segment 25a and the second coil segment 25b each are adjacent to a slot inner wall 22a (FIG. 2). In other words, this is a location at which four side surfaces of each of the first and second coil segments 25a and 25b are adjacent to another conductor part.

At such a location, the thickness is substantially uniformly formed for two side surfaces of the foamed adhesive layer 13 of the foamed adhesive flat wire 10, i.e., the foamed adhesive layer upper surface 13a and the foamed adhesive layer lower surface 13b, and the foamed adhesive layer side surfaces 13c and 13d. Or, the thickness may be different according to the potential difference between the adjacent objects.

FIG. 3 is a partial transverse cross-sectional view showing a B-B cross section of FIG. 2 showing the stator winding 24 of the stator according to the first embodiment.

The B-B cross section of FIG. 2 is at a location at which the first coil segment 25a and the second coil segment 25b are adjacent to each other, but no object is adjacent to the side surfaces of each of the first and second coil segments 25a and 25b. In other words, only the foamed adhesive layer upper surface 13a or the foamed adhesive layer lower surface 13b of the first and second coil segments 25a and 25b are adjacent to an object. Except for the coil segments at the outermost part or the innermost part in the radial direction, only the foamed adhesive layer upper surface 13a and the foamed adhesive layer lower surface 13b are adjacent to an object.

Thus, at locations at which the side surfaces of each of the first and second coil segments 25a and 25b are not adjacent to an object, it is unnecessary for the foamed adhesive layer 13 to foam, expand, and adhere to an adjacent object. Accordingly, in such a case, the thickness of the foamed adhesive layer 13 at the foamed adhesive layer side surfaces 13c and 13d may be less than the thickness of the foamed adhesive layer 13 at the foamed adhesive layer upper surface 13a and the foamed adhesive layer lower surface 13b as shown in FIG. 3. Or, for example, the foamed adhesive layer 13 may be partially formed or not formed at all at locations with a spacing interposed in the longitudinal direction.

FIG. 4 is a partial transverse cross-sectional view showing a C-C cross section and a D-D cross section of FIG. 2 showing the stator winding 24 of the stator according to the first embodiment.

The C-C cross section and the D-D cross section of FIG. 2 are locations at which there are no objects adjacent to any of the side surfaces of the first and second coil segments 25a and 25b. At locations at which there is no adjacent object, it is unnecessary for the foamed adhesive layer 13 to foam, expand, and adhere to an adjacent object. Accordingly, in such a case, the thickness of the foamed adhesive layer 13 may be less than the thickness of the first embodiment at the foamed adhesive layer upper surface 13a, the foamed adhesive layer lower surface 13b, and the foamed adhesive layer side surfaces 13c and 13d as shown in FIG. 4. Or, the foamed adhesive layer 13 may be partially formed or not formed at locations in the longitudinal direction.

At such parts of the stator 20, the foamed adhesive layer 13 is caused to foam and expand in volume by heating the foamed adhesive layer 13. Also, when the foamed adhesive layer 13 that is foamed contacts an adjacent member, the foamed adhesive flat wire 10 can be adhered to the member. As a result, the stator winding 24 can be stably adhered.

### [Second embodiment]

FIG. 5 is a partial transverse cross-sectional view showing a foamed adhesive flat wire 10a according to a second embodiment. The embodiment is a modification of the first embodiment in which a heat-foamed sheet 14 is wound around the surfaces of the enamel layer 12 as the foamed adhesive layer 13.

FIG. 6 is a partial longitudinal cross-section showing the heat-foamed sheet 14 of the foamed adhesive flat wire 10a according to the second embodiment.

The heat-foamed sheet 14 includes a film substrate 14a, an adhesive layer 14b formed at the surface of the film substrate 14a, a nonwoven fabric layer 14c located at the outer surface of the adhesive layer 14b, and a foaming adhesive layer 14d formed at the outer surface of the nonwoven fabric layer 14c. The foaming adhesive layer 14d is foamed by heating to a prescribed temperature or higher. Here, for example, in the case of a thermoplastic resin, the prescribed temperature is the glass transition temperature, e.g., about 100 °C to 120 °C.

The film substrate 14a can include a resin film of a polyester resin, a polyamide resin, a polyimide resin, a polysulfone resin, a polyetherketone resin, etc.

The adhesive layer 14b is used to adhere the nonwoven fabric layer 14c to the film substrate 14a; and the material of the adhesive layer 14b may be, for example, a thermoplastic resin-based, thermosetting resin-based, or elastomer-based adhesive.

The nonwoven fabric layer 14c may be, for example, a nonwoven fabric using fibers such as cellulose fibers, polyester fibers, nylon fibers, aramid fibers, polyphenylene sulfide fibers, liquid crystal polymer fibers, glass fibers, metal fibers, carbon fibers, etc.

The foaming adhesive layer 14d includes an epoxy resin, a curing agent, a thermoplastic resin, and a foaming agent. Other additives such as a curing accelerator, a filler, etc., also may be included as necessary.

The foamed adhesive flat wire 10a of the embodiment that has such a configuration is easy to assemble by winding the heat-foamed sheet 14 around the surfaces of the enamel layer 12 as the foamed adhesive layer 13; and effects similarly to the first embodiment can be obtained.

### [Third embodiment]

FIG. 7 is a perspective view illustrating a flat wire in-stator connection method of a stator manufacturing method according to a third embodiment. Also, FIG. 8 is a longitudinal cross-sectional view showing welding grooves in the flat wire in-stator connection method of the stator manufacturing method according to the third embodiment.

The embodiment is a modification of the first embodiment. Normally, in a typical technique, a coil segment that includes two straight parts and a connecting part connecting the two straight parts is inserted from one end side of the stator core 21 and connected at the other end side. On the other hand, the embodiment relates to a connection method using a technique in which coil segments are inserted from two sides of the stator core 21; and the straight parts of each coil segment are connected inside the stator slots 22 (FIG. 8).

Specifically, as shown in FIG. 7, the tip of a first flat wire 17a, which is a straight part of a coil segment, is inserted through a first end part 21a of the stator core 21; the tip of a second flat wire 17b, which is a straight part of a coil segment, is inserted through a second end part 21b of the stator core 21; and the tips meet inside the same stator slot 22 at a welding groove part 18.

As shown in FIG. 8, a tapered first welding groove 18a is formed at the tip of the first flat wire 17a. Also, a tapered second welding groove 18b is formed at the tip of the second flat wire 17b. The tapered surfaces of the first and second welding grooves 18a and 18b are closely adhered at the welding groove part 18. This state corresponds to an adhesion step S03 of the welding groove part described below.

FIG. 9 is a flowchart showing a procedure of the stator manufacturing method according to the third embodiment.

First, the stator core 21 is assembled (step S01).

Then, coil segments are prepared in which welding grooves are formed (step S02). Specifically, first, grooving of the tips of the rectangular conductors 11 of the straight parts of the coil segments is performed (step S02a). Then, each coil segment is formed (step S02b). In other words, a coil segment that includes two straight parts and a connecting part is made.

The assembly step S01 of the stator core 21 and the preparation step S02 of the coil segments may be performed in any order, in parallel, or in reverse order.

Then, the setting step S03 of the coil segment is performed.

First, the straight parts of the coil segments are inserted into the stator slots 22 from two axial sides (step S03a). Specifically, a first coil segment 26a is inserted into the first stator slot 22 and the second stator slot from the first end part 21a side of the stator core 21 to a prescribed depth position in the axial direction. Also, a second coil segment 26b is inserted into the first stator slot 22 and the second stator slot from the second end part 21b side of the stator core 21 to the prescribed depth position in the axial direction. Here, FIGS. 7 and 8 show a case where the first flat wire 17a of the straight part of the first coil segment 26a and the second flat wire 17b of the straight part of the second coil segment 26b are housed in the same first stator slot 22.

All coil segments may be simultaneously inserted in the setting of the coil segments of step S03. Or, for example, the insertion may be performed for each layer.

Then, a check of the adhesion of the welding groove parts to each other and fixation of the coil segments is performed (step S03b). Here, the check of the adhesion is unessential. Also, even when the check is performed, it is difficult to check the adhesion for all of the welding groove parts 18; and it is sufficient to observe the straight parts at the innermost circumference inside the stator slots 22 from the inner circumference side of the stator core 21. Also, only a prescribed number may be checked as a sampling inspection. Also, if it can be dimensionally ascertained beforehand that the first and second welding grooves 18a and 18b of the two tips are closely adhered when the first flat wire 17a and the second flat wire 17b are inserted to a prescribed depth position, a check of the prescribed depth position may be used instead. Also, fixation of the coil segments may be performed as necessary.

Then, it is determined whether or not step S03 is performed for all coil segments (step S04). Steps S03 and S04 are repeated when it is determined that step S03 is not performed for all coil segments (step S04: NO).

As shown in FIG. 8, the tapers of the first and second welding grooves 18a and 18b are formed with the same slope, and so the first welding groove 18a and the second welding groove 18b are closely adhered when the first flat wire 17a and the second flat wire 17b are inserted and the tips contact each other. Also, the enamel layer 12 and the foamed adhesive layer 13 at the outer side of each rectangular conductor 11 also are formed with similar slopes and are closely adhered to each other. Here, closely adhered means being within the range of the patterning accuracy of the taper slopes of the first and second flat wires 17a and 17b and within the range of the arrangement accuracy between the first flat wire 17a and the second flat wire 17b.

When it is determined that step S03 is performed for all coil segments (step S04: YES), the foamed adhesive flat wire 10 or 10a is then fixedly adhered (step S05).

Specifically, first, an external terminal (not illustrated) is connected to a power supply (step S05a). The connection may include temporary wiring. Then, the rectangular conductor 11 is electrically energized (step S05b). The electrical energization is performed for a prescribed period of time. Here, the prescribed period of time is the time necessary for the rectangular conductors 11 to be welded to each other and for the rectangular conductors 11 to be covered with the foamed adhesive layers 13 at the welding groove part 18. Finally, the adhesion between the foamed adhesive layers 13 is checked (step S05c). Here, it is difficult to perform the check for all of the welding groove parts 18; and it is sufficient to observe the straight parts at the innermost circumference inside the stator slots 22 from the inner circumference side of the stator core 21. Also, only a prescribed number may be checked as a sampling inspection.

Thus, the stator 20 that includes the stator core 21 and the stator winding 24 is assembled and manufactured.

According to the embodiment, the winding can be stably adhered, even when a technique is used in which the coil segments are inserted from two sides of the stator core 21, and the straight parts of the coil segments are connected inside the stator slot 22.

According to the embodiments above, a foamed adhesive flat wire, a stator, and a stator manufacturing method can be provided in which the winding is stably adhered and the reliability for vibration resistance is increased.

### [Other embodiments]

While embodiments of the invention are described above, the embodiments are presented as examples, and are not intended to limit the scope of the inventions. Also, features of the embodiments may be combined. Furthermore, the embodiments may be embodied in a variety of other forms; and various omissions, substitutions, and changes may be made without departing from the spirit of the inventions. The embodiments and their modifications are within the scope and spirit of the inventions, and are within the scope of the inventions described in the claims and their equivalents.

### [Reference Numeral List]

10, 10a foamed adhesive flat wire
11 rectangular conductor
11c corner part
12 enamel layer
13 foamed adhesive layer
13a foamed adhesive layer upper surface
13b foamed adhesive layer lower surface
13c, 13d foamed adhesive layer side surface
14 heat-foamed sheet
14a film substrate
14b adhesive layer
14c nonwoven fabric layer
14d foaming adhesive layer
17a first flat wire
17b second flat wire
18 welding groove part
18a first welding groove
18b second welding groove
20 stator
21 stator core
21a first end part
21b second end part
22 stator slot
22a slot inner wall
23 stator teeth
24 stator winding
25a first coil segment
25b second coil segment
25c straight part
26a first coil segment
26b second coil segment

## Claims

1. A foamed adhesive flat wire, comprising:
a rectangular conductor having a substantially rectangular cross section;
an enamel layer located at an outer surface of the rectangular conductor; and
a foamed adhesive layer located at an outer surface of the enamel layer, the foamed adhesive layer being foamable and adhesive at or above a prescribed temperature.

2. The foamed adhesive flat wire according to claim 1, wherein
the foamed adhesive layer has a reduced thickness or a thickness of zero at side surfaces of the foamed adhesive flat wire that are not adjacent to another member compared to side surfaces of the foamed adhesive flat wire that are adjacent to another member.

3. The foamed adhesive flat wire according to claim 1, wherein
the foamed adhesive layer is a heat-foamed sheet, and
the heat-foamed sheet includes:
a film substrate or a nonwoven fabric substrate; and
a foaming adhesive layer formed at a surface of the film substrate or the nonwoven fabric substrate.

4. The foamed adhesive flat wire according to claim 1, wherein
the foamed adhesive layer is a heat-foamed sheet, and
the heat-foamed sheet includes:
a film substrate;
an adhesive layer formed at a surface of the film substrate;
a nonwoven fabric layer located at an outer surface of the adhesive layer; and
a foaming adhesive layer formed at an outer surface of the nonwoven fabric layer.

5. The foamed adhesive flat wire according to claim 1, wherein
among four side surfaces of the rectangular conductor on which the foamed adhesive layer is formed, the foamed adhesive layer is present only at two of the side surfaces that are opposite each other.

6. The foamed adhesive flat wire according to claim 1, wherein
at each side surface of the rectangular conductor on which the foamed adhesive layer is formed, regions where the foamed adhesive layer is partially formed are arranged with a spacing interposed in a longitudinal direction of the rectangular conductor.

7. A stator, comprising:
a stator core having a plurality of stator slots formed in an inner circumference side of the stator core, the plurality of stator slots being arranged with a spacing interposed in a circumferential direction; and
a stator winding having a portion of the stator winding housed inside the stator slots,
the foamed adhesive flat wire according to any one of claims 1 to 6 being used as the stator winding.

8. A stator, comprising:
a stator core having a plurality of stator slots formed in an inner circumference side of the stator core, the plurality of stator slots being arranged with a spacing interposed in a circumferential direction; and
a stator winding having a portion of the stator winding housed inside the stator slots,
the foamed adhesive flat wire according to claim 6 being used as the stator winding,
two of the side surfaces of the foamed adhesive layer being surfaces in the circumferential direction of the stator slots.

9. The stator according to claim 8, further comprising:
a slot insulation paper inside the stator slots.

10. A stator manufacturing method, comprising:
assembling a stator core having a plurality of stator slots;
preparing coil segments in which welding grooves are formed;
inserting a first coil segment into a first stator slot and a second stator slot from a first end side of the stator core to a prescribed depth position in an axial direction;
inserting a second coil segment into the first stator slot and the second stator slot from a second end side of the stator core to the prescribed depth position in the axial direction; and
fixedly adhering a foamed adhesive flat wire by heating a rectangular conductor,
the prescribed depth position being a depth position in the first stator slot at which the welding groove of the first coil segment and the welding groove of the second coil segment are closely adhered.

11. The stator manufacturing method according to claim 10, wherein
the heating is performed by emitting heat by electrically energizing the foamed adhesive flat wire.
